# EUROPEAN PATENT APPLICATION

(11) **EP 3 875 210 A1**
(43) Date of publication of application: **08.09.2021**
(21) Application number: 21153210.6
(22) Date of filing: 25.01.2021
(51) Int. Cl.: B23K 26/12, B23K 26/142, B23K 26/14, B23K 26/38

(54) **LASER PROCESSING DEVICE WITH GAS PORTS AND CENTRAL SUCTION PORT**

(30) Priority: 06.03.2020 JP 2020038772
(71) Applicant: Mitsubishi Heavy Industries, Ltd., Chiyoda-ku, Tokyo 1008332 (JP)
(72) Inventor: KOMATSU, Yoshinao, Tokyo 1008332 (JP); YOSHIDA, Kazuhiro, Tokyo 1008332 (JP); GOYA, Saneyuki, Tokyo 1008332 (JP); INOUE, Akiko, Tokyo 1008332 (JP); FUJIYA, Yasuyuki, Tokyo 1008332 (JP); NARITA, Ryuichi, Tokyo 1008332 (JP)
(74) Representative: Studio Torta S.p.A.

(57) **Abstract**

The present invention relates to a laser processing device (100) is capable of performing processing with a higher degree of accuracy. The laser processing device (100) includes a laser irradiation unit (1) that performs processing on a workpiece (W) by using a laser while scanning a workpiece surface to form a kerf, jet nozzles (3) that respectively form jet flows (Fj) flowing toward a bottom surface of the kerf on front and rear sides in a scanning direction of the laser (1), and an intake part (23) that sucks, above injection ports of the jet nozzles (3) , a gas in a region surrounded by the jet flows (Fj) from the front and rear sides. In a state in which a certain region of the kerf is isolated by the jet flows (Fj), the gas is sucked from this region by the intake part (23). As a result, a suction force by the intake part (23) can reach the bottom surface of the kerf.

## Description

### Technical Field

The present disclosure relates to a laser processing device.

### Background Art

It is known that when performing laser processing, fine particles or gases called plumes or fumes are generated in a processing area, such as a kerf. When the plumes or fumes are generated, a laser beam may be scattered or attenuated, and thus a deterioration in processing accuracy may occur. Further, exposure to a high temperature of these gases alters a cutting surface (a kerf) of a workpiece, and a heat-affected layer may be formed on the cutting surface. In this case, it is necessary to add a process for removing the heat-affected layer from the workpiece.

For this reason, it is necessary to remove the plumes or fumes from the kerf. In a device according to Patent Document 1, a dust collection port is provided above a table on which the workpiece is placed. It is considered that by sucking the plumes or fumes into the dust collection port, the plumes or fumes can be removed.

### Citation List

### Patent Literature

Patent Document 1: JP 3-258483 A

### Summary of Invention

### Technical Problem

However, in the device according to Patent Document 1, when the kerf gets deeper as the laser processing progresses, a suction force from the dust collection port may not reach a bottom portion of the kerf. As a result, the plumes or fumes may remain in the kerf.

The present disclosure has been conceived to solve the problem described above, and an object of the present disclosure is to provide a laser processing device capable of performing processing with a higher degree of accuracy.

### Solution to Problem

In order to solve the problem described above, a laser processing device according to the present disclosure includes a laser irradiation unit configured to perform processing on a workpiece by using a laser, while scanning a workpiece surface, to form a kerf, jet nozzles respectively provided on front and rear sides in a scanning direction of the laser and configured to form jet flows flowing toward a bottom surface of the kerf, and an intake part configured to suck, above injection ports of the jet nozzles, a gas in a region surrounded by the jet flows from the front and rear sides.

### Advantageous Effects of Invention

According to the present disclosure, a laser processing device can be provided that is capable of performing processing with a higher degree of accuracy.

### Brief Description of Drawings

FIG. 1 is a cross-sectional view illustrating a configuration of a laser processing device according to a first embodiment of the present disclosure.
FIG. 2 is a diagram of the laser processing device according to the first embodiment of the present disclosure, as viewed from a scanning direction.
FIG. 3 is a diagram of the laser processing device according to the first embodiment of the present disclosure, as viewed from below.
FIG. 4 is a diagram of a laser processing device according to a second embodiment of the present disclosure, as viewed from the scanning direction.
FIG. 5 is a cross-sectional view illustrating a configuration of a laser processing device according to a third embodiment of the present disclosure.
FIG. 6 is a diagram of the laser processing device according to the third embodiment of the present disclosure, as viewed from above.
FIG. 7 is a cross-sectional view illustrating a configuration of a laser processing device according to a fourth embodiment of the present disclosure.

### Description of Embodiments

### First Embodiment

### Configuration of Laser Processing Device

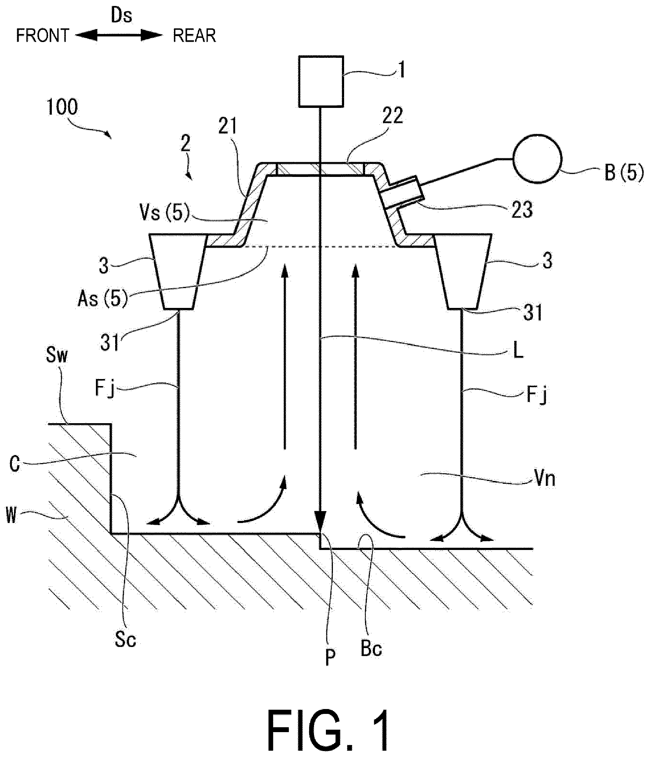

A laser processing device 100 according to a first embodiment of the present disclosure will be described below with reference to FIG. 1 to FIG. 3. The laser processing device 100 according to the present embodiment is used to perform laser processing on a surface of a workpiece W (a workpiece surface Sw). As illustrated in FIG. 1, the laser processing device 100 includes a laser irradiation unit 1 and a nozzle assembly 2.

### Configuration of Laser Irradiation Unit

The laser irradiation unit 1 irradiates, from above the workpiece W, the workpiece surface Sw with a laser beam L in a high energy state. As a light source, a YAG laser or a fiber laser can be used, for example. The laser irradiation unit 1 may be the light source, or may be a device that emits the laser beam L reflected by a mirror. Further, a galvanometer mirror can also be used.

In the present embodiment, as illustrated by an arrow Ds illustrated in FIG. 1, the laser processing device 100 performs scanning in a linear manner or in a curved manner, above the workpiece surface Sw. Cutting (the laser processing) is performed on the workpiece W at a processing point P using a thermal energy of the laser beam L irradiated from the laser irradiation unit 1. As a result of the cutting, a kerf C is formed in the workpiece W. In the example illustrated in FIG. 1, the kerf C is formed by an end surface Sc on the front side in the scanning direction Ds and a bottom surface Bc extending in a downward direction. By causing the laser beam L to scan, the depth of the bottom surface Bc gradually increases.

### Configuration of Nozzle Assembly

The nozzle assembly 2 is provided for removing a gas, such as the plumes or fumes mentioned above, from the kerf C. The nozzle assembly 2 includes a cover 21, a window portion 22, a communication portion 23, jet nozzles 3, side jet nozzles 4, and an intake part 5.

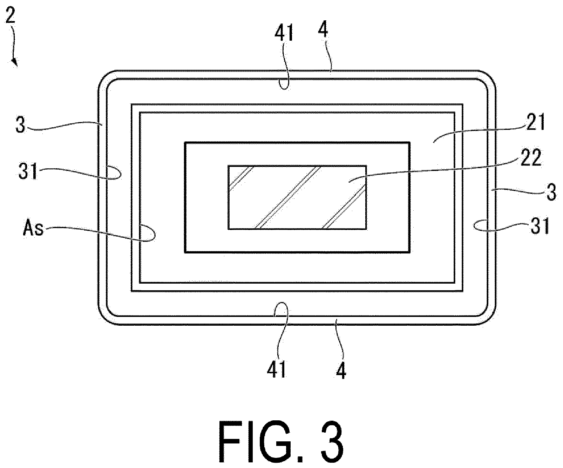

The cover 21 is disposed above the workpiece surface Sw so as to be spaced apart from the workpiece surface Sw. The cover 21 is disposed on a path of the laser beam L irradiated from the laser irradiation unit 1. As illustrated in FIG. 1, the cover 21 bulges in an upward direction to form a convex shape. A suction space Vs, which will be described later, is formed below the cover 21. This suction space Vs is communicated with the outside by the communication portion 23, which is provided in a side surface of the cover 21. Further, as illustrated as an example in FIG. 3, the cover 21 has a rectangular shape when viewed from below. Note that the shape of the cover 21 is not limited to the rectangular shape, and may be a circular or oval shape. The window portion 22 is provided in a central portion of the cover 21. The window portion 22 is formed of a material, such as glass, through which the laser beam L can be transmitted.

As illustrated in FIG. 1, the jet nozzles 3 are respectively provided on front and rear sides of the cover 21 in the scanning direction Ds. The jet nozzles 3 form jet flows Fj by jetting a gas, which has been guided from a supply source (not illustrated), from injection ports 31 downward (toward the bottom surface Bc). As illustrated in FIG. 3, the injection ports 31 extend in the horizontal direction (a width direction) orthogonal to the scanning direction Ds.

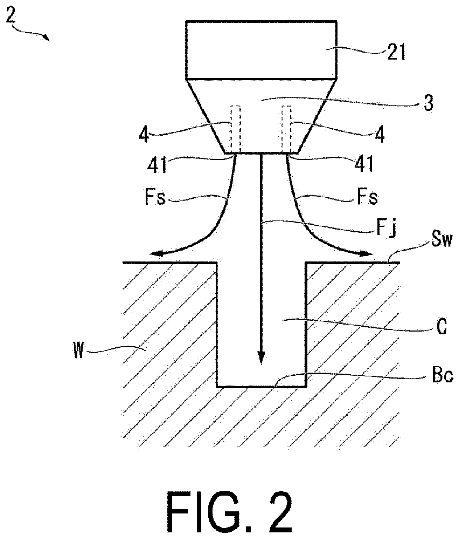

As illustrated in FIG. 2 or FIG. 3, the side jet nozzles 4 are provided on both sides of the jet nozzles 3 in the width direction. The side jet nozzles 4 extend in the scanning direction Ds. The side jet nozzles 4 form side jet flows Fs by jetting air from side injection ports 41 toward both sides, in the width direction, of the kerf C in the workpiece surface Sw (see FIG. 2). The side injection ports 41 and the injection ports 31 are communicated with each other so as to form an annular opening when viewed from below. The processing point P is surrounded by the side jet flows Fs and the above-described jet flows Fj, from both sides in the width direction and the front-rear direction. As a result, the processing point P is sealed from the periphery.

As illustrated in FIG. 1, the intake part 5 includes the suction space Vs formed below the above-described cover 21, and a blower B. The blower B sucks a gas inside the suction space Vs through the communication portion 23 described above. As a result, a region below the suction space Vs (that is, a region surrounded by the jet flows Fj and the side jet flows Fs) is in a negative pressure state (referred to as a negative pressure space Vn).

A boundary surface below the suction space Vs (that is, an opening on the lower side of the cover 21) is formed as a suction port As. The suction port As is positioned above the injection ports 31 of the jet nozzles 3 in the vertical direction. Furthermore, as illustrated in FIG. 3, an opening area of the suction port As is set to be larger than a sum of opening areas of the injection ports 31 and the side injection ports 41. Further, the opening area of the suction port As is set to be larger than the opening area of the injection ports 31.

In a state in which the negative pressure space Vn is formed as described above, the nozzle assembly 2 moves integrally with the laser irradiation unit 1 following the laser irradiation unit 1 in the scanning direction Ds. In other words, the nozzle assembly 2 is fixed to the laser irradiation unit 1.

### Operational Effects

Next, an operation of the laser processing device 100 according to the present embodiment will be described. The laser beam L irradiated from the laser irradiation unit 1 is irradiated onto the workpiece surface Sw. The kerf C is formed in the workpiece W by the laser processing device 100 reciprocating (scanning) in the scanning direction Ds in a linear manner or in a curved manner.

Here, when performing the above-described laser processing with respect to the workpiece W formed of CFRP, a portion of the workpiece W is burned or melted due to the thermal energy of the laser beam L, and as a result, plumes or fumes are generated. When such plumes or fumes are generated, a cutting surface of the workpiece W is altered as a result of being exposed to a high temperature of the gas, and a heat-affected layer may be formed on the cutting surface. When the laser processing is performed on the CFRP, the heat-affected layer is formed as a result of a resin component of the CFRP dropping off or being carbonized. The heat-affected layer is unnecessary, in order to secure product quality. Therefore, there has been demand for a technology for suppressing the formation of the heat-affected layer.

Thus, in the laser processing device 100 according to the present embodiment, the plumes and fumes described above are removed by the nozzle assembly 2. According to the configuration described above, a certain region of the kerf C is isolated from the outside by the jet flows Fj jetted from the jet nozzles 3, and at the same time, the gas is sucked from this region by the intake part 5. Thus, this region obtains a negative pressure state (thus forming the negative pressure space Vn). As a result, a suction force by the intake part 5 can reach a bottom portion of the kerf C. On the other hand, when only the suction is performed without isolating the region using the jet flows Fj, the suction force may not reach the bottom surface Bc of the kerf C, and the plumes or fumes may remain in the kerf C. According to the configuration described above, since the suction is performed by the intake part 5 in a state in which the certain region of the kerf C is isolated by the jet flows Fj, the suction force can reach the bottom portion of the kerf C. As a result, the plumes and fumes can be removed by the intake part 5 in a stable manner.

Furthermore, since the suction port As of the intake part 5 is provided above the injection ports 31 of the jet nozzles 3, a phenomenon (a short circuit) in which the jet flows Fj are sucked by the intake part 5 before reaching the bottom portion of the kerf C can be avoided.

Further, according to the configuration described above, the opening area of the suction port As of the intake part 5 is larger than the opening area of the injection ports 31. In this way, a flow rate of the gas sucked by the intake part 5 can be made lower than a flow rate of the jet flow Fj. As a result, it is possible to further suppress the phenomenon (the short circuit) in which the jet flows Fj are sucked by the intake part 5 before reaching the bottom portion of the kerf C.

In addition, according to the configuration described above, the cover 21 covers the suction port As from above, and at the same time, the cover 21 is provided with the window portion 22 through which the laser beam L can be transmitted. In this way, the gas can be sucked by the intake part 5 from above the processing point P in a stable manner without blocking an irradiation direction of the laser beam L. As a result, the possibility of the plumes or fumes remaining in the kerf C can be further reduced.

Furthermore, according to the configuration described above, the side jet nozzles 4 form the side jet flows Fs. As a result, in addition to the processing point P being surrounded, from the front-rear direction, by the jet flows of the jet nozzles 3, the processing point P can be surrounded from the sides by the side jet flows Fs. By sucking the gas in the region surrounded by the intake part 5, the negative pressure state can be maintained in a more stable manner.

Furthermore, according to the configuration described above, as a result of the nozzle assembly 2, including the jet nozzles 3 and the intake part 5, following the laser irradiation unit 1, it is possible to remove the plumes and fumes in a constant and stable manner in accordance with the position of the processing point P.

### Second Embodiment

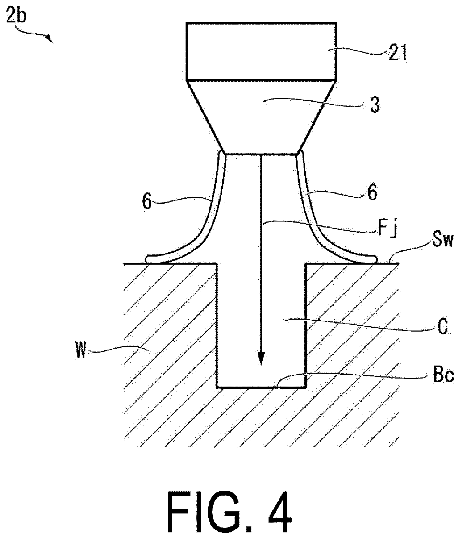

Next, a second embodiment of the present disclosure will be described with reference to FIG. 4. Note that the same components as those of the first embodiment will be denoted by the same reference signs, and a detailed description thereof will be omitted. As illustrated in FIG. 4, in a nozzle assembly 2b according to the present embodiment, skirt portions 6 are provided in place of the side jet nozzles 4 described above. The skirt portion 6 extends downward from a side edge of the cover 21. The skirt portion 6 has a membrane-like shape formed from a material that can elastically deform, such as rubber, for example. The skirt portion 6 may be divided into a plurality of sections in the front-rear direction. The lower end of the skirt portion 6 is in contact with the workpiece surface Sw. More specifically, the further downward the skirt portion 6 extends, the further the skirt portion 6 extends in a direction away from the kerf C. As a result, a state is obtained in which the inner surface of the skirt portion 6 is in contact with the workpiece surface Sw.

According to the configuration described above, in addition to the processing point P being surrounded, from the front-rear direction, by the jet flows Fj of the jet nozzles 3, the processing point P can be surrounded from the sides by the skirt portions 6. By sucking the gas in the region surrounded by the intake part 5, the negative pressure state can be maintained in a more stable manner. As a result, the gas generated by the laser processing can be removed in a stable manner. Further, compared with the configuration provided with the side jet nozzles 4 described above, the device can be simplified, and thus it is also possible to reduce manufacturing and maintenance costs. Further, because it is not necessary to form the side jet flows Fs, a gas consumption amount can be reduced by a corresponding amount.

### Third Embodiment

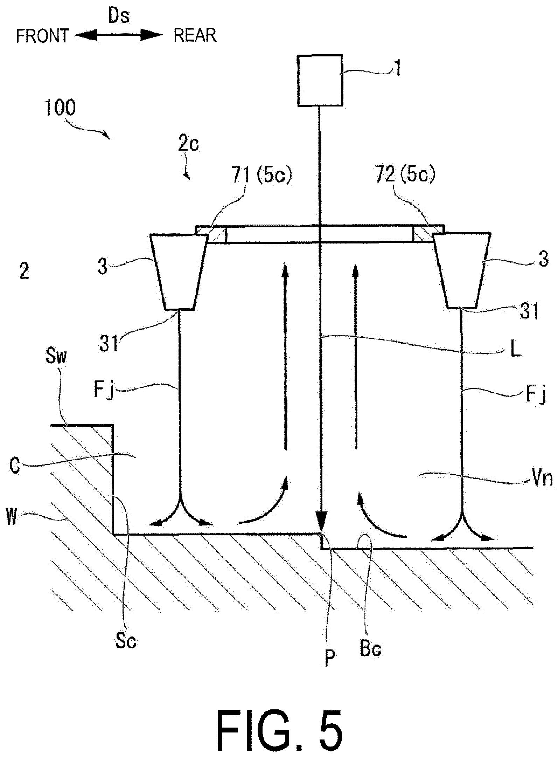

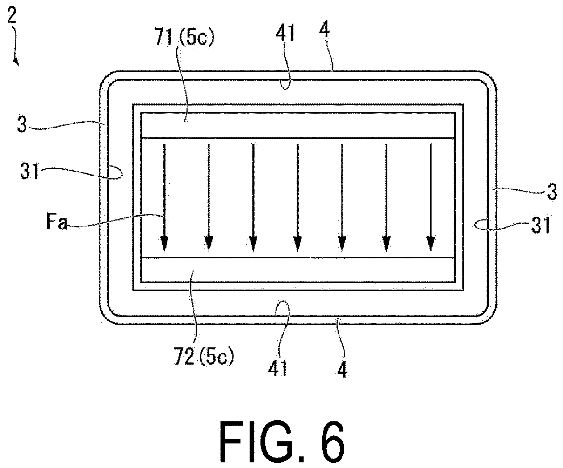

Next, a third embodiment of the present disclosure will be described with reference to FIG. 5 and FIG. 6. The same components as those in each of the above-described embodiments will be denoted by the same reference signs, and a detailed description thereof will be omitted. A nozzle assembly 2c according to the present embodiment includes an air injection part 71 and an air intake part 72 in place of the cover 21 described in the first embodiment. As illustrated in FIG. 6, the air injection part 71 is provided on the inner side of the side jet nozzle 4 on one side in the width direction (that is, on a side on which the kerf C is located). The air injection part 71 extends in the scanning direction Ds over the same length as the side jet nozzle 4. The air injection part 71 jets air toward the other side in the width direction.

The air intake part 72 is provided on the inner side of the side jet nozzle 4 on the other side in the width direction (that is, on the side on which the kerf C is located). The air intake part 72 extends in the scanning direction Ds over the same length as the side jet nozzle 4. The air intake part 72 sucks the flow of the air flowing from the air injection part 71. As a result, a membrane-like layer is formed between the air injection part 71 and the air intake part 72 by a flow of air (an air flow Fa) flowing in a direction including a plane intersecting the irradiation direction of the laser beam L. This layer functions as an aerodynamic transmission window through which the laser beam L can be transmitted, while isolating a space below the layer (the negative pressure space Vn) from the outside. Furthermore, as described above, the gas in the negative pressure space Vn is also sucked by an ejector effect generated as a result of the air being sucked by the air intake part 72. In other words, the air injection part 71 and the air intake part 72 also function as an intake part 5c.

According to the configuration described above, the air flow is formed so as to flow from the air injection part 71 toward the air intake part 72. By this air flow, the region defined by the jet flows Fj from the jet nozzles 3 can be isolated from the outside, from above also. Furthermore, in this region, the ejector effect is generated as a result of the air being sucked by the air intake part 72. In this way, a negative pressure state can be obtained inside the region. As a result, the suction force by the air intake part 72, which serves as the intake part 5c, can reach the bottom portion of the kerf C. Furthermore, since the laser beam L can be transmitted through the air flow formed by the air injection part 71 and the air intake part 72, the air flow functions as the aerodynamic window. As a result, it is possible to prevent the irradiation direction of the laser beam L from being blocked.

### Fourth Embodiment

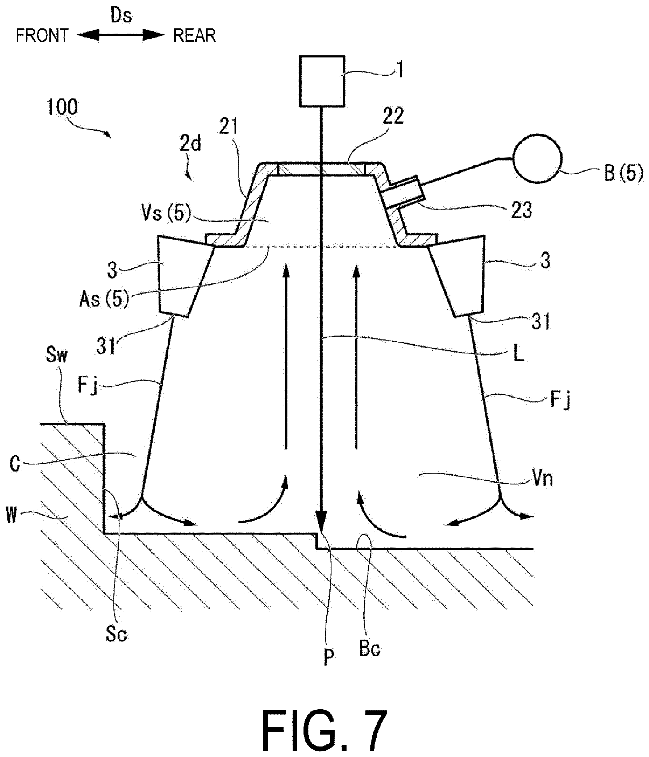

Next, a fourth embodiment of the present disclosure will be described with reference to FIG. 7. The same components as those in each of the above-described embodiments will be denoted by the same reference signs, and a detailed description thereof will be omitted. As illustrated in FIG. 7, in a nozzle assembly 2d according to the present embodiment, the posture of the jet nozzle 3 is different from that of each of the above-described embodiments. Specifically, on the front side in the scanning direction Ds, the jet nozzle 3 is configured to jet the jet flow Fj toward the front as it flows downward. On the other hand, on the rear side in the scanning direction Ds, the jet nozzle 3 is configured to jet the jet flow Fj toward the rear as it flows downward.

Here, the region surrounded by the jet flows Fj on the front and rear sides is in a negative pressure state as a result of the gas being sucked by the intake part 5. When the jet flow Fj flows vertically downward, this negative pressure causes the jet flow Fj to be drawn inward and thereby redirected, and the jet flow Fj may not reach the bottom surface Bc of the kerf C. In this case, the isolation of the region becomes insufficient, and thus the negative pressure state cannot be maintained. However, according to the configuration described above, on the front side in the scanning direction Ds, the jet flow Fj is formed so as to flow toward the front as it flows downward. On the rear side in the scanning direction Ds, the jet flow Fj is formed so as to flow toward the rear as the jet flow Fj flows downward. In other words, the further the jet flow Fj flows downward, the further the jet flow Fj flows in a direction away from the processing point P. As a result, the possibility of the jet flow Fj being drawn inward is reduced, and the negative pressure state of the negative pressure space Vn can be maintained in a stable manner.

### Other Embodiments

Each of the embodiments of the present disclosure has been described above. Note that various changes and modifications can be made to the above-described configurations without departing from the gist of the present disclosure. For example, in each of the above-described embodiments, a configuration can be adopted in which the flow rate of the jet flow Fj from the jet nozzle 3 is varied in the front-rear direction of the scanning direction Ds.

### Notes

The laser processing device 100 according to each of the embodiments is understood as follows, for example.
(1) A laser processing device 100 according to a first aspect includes a laser irradiation unit 1 configured to perform processing on a workpiece W by using a laser beam L, while scanning a workpiece surface Sw, to form a kerf C, jet nozzles 3 respectively provided on front and rear sides in a scanning direction Ds of the laser beam L and configured to form jet flows Fj flowing toward a bottom surface Bc of the kerf C, and an intake part 5 configured to suck, above injection ports 31 of the jet nozzles 3, a gas in a region surrounded by the jet flows Fj from the front and rear sides.
   According to the configuration described above, in a state in which a certain region of the kerf C is isolated by the jet flows Fj, the intake part 5 can suck the gas from this region. As a result, a suction force by the intake part 5 can reach the bottom surface Bc of the kerf C. Furthermore, since the intake part 5 is provided above the injection ports 31, a phenomenon (a short circuit) in which the jet flows Fj are sucked by the intake part 5 before reaching the bottom surface Bc of the kerf C can be avoided.
(2) In the laser processing device 100 according to a second aspect, an opening area of the intake part 5 is larger than an opening area of the injection ports 31.
   According to the configuration described above, a flow rate of the gas sucked by the intake part 5 can be made lower than a flow rate of the jet flow Fj. As a result, it is possible to further suppress the phenomenon (the short circuit) in which the jet flows Fj are sucked by the intake part 5 before reaching the bottom surface Bc of the kerf C.
(3) The laser processing device 100 according to a third aspect further includes a cover 21 covering the workpiece W from above, and a window portion 22 provided in the cover 21 and configured to transmit the laser beam L.
   According to the configuration described above, the cover 21 is provided with the window portion 22 through which the laser beam L can be transmitted. In this way, the gas can be sucked by the intake part 5 from above the processing point P in a stable manner without blocking an irradiation direction of the laser beam L.
(4) In the laser processing device 100 according to a fourth aspect, the intake part 5c further includes an air injection part 71 provided between the jet nozzles 3 and configured to jet air from one side in a direction including a plane intersecting an irradiation direction of the laser beam L, and an air intake part 72 configured to suck the air jetted from the air injection part 71.
   According to the configuration described above, the air flow is formed so as to flow from the air injection part 71 toward the air intake part 72. By this air flow, the region defined by the jet flows Fj from the jet nozzles 3 can be isolated from the outside, from above also. Furthermore, in this region, the ejector effect is generated as a result of the air being sucked by the air intake part 72. In this way, a negative pressure state can be obtained inside the region. Furthermore, since the laser beam L can be transmitted through the air flow formed by the intake part 5c, the air flow functions as an aerodynamic window. As a result, it is possible to prevent the irradiation direction of the laser beam L from being blocked.
(5) The laser processing device 100 according to a fifth aspect further includes side jet nozzles 4 provided on both sides of the jet nozzle 3 in a width direction orthogonal to the scanning direction Ds, extending in the scanning direction Ds, and configured to form side jet flows Fs flowing toward both sides in a width direction of the kerf C in the workpiece surface Sw.
   According to the configuration described above, in addition to the processing point P being surrounded, from the front and rear sides, by the jet flows Fj, the processing point P can also be surrounded from the sides by the side jet flows Fs. By sucking the gas in the region surrounded by the intake part 5, the negative pressure state can be maintained in a more stable manner.
(6) The laser processing device 100 according to a sixth aspect further includes skirt portions 6 provided on both sides of the jet nozzle 3 in a width direction orthogonal to the scanning direction Ds, and extending in the scanning direction Ds, a lower end of each of the skirt portions 6 being in contact with the workpiece surface Sw.
   According to the configuration described above, in addition to the processing point P being surrounded, from the front and rear sides, by the jet flows Fj, the processing point P can also be surrounded from the sides by the skirt portions 6. By sucking the gas in the region surrounded by the intake part 5, the negative pressure state can be maintained in a more stable manner. Further, because it is not necessary to form the side jet flows Fs, a gas consumption amount can be reduced by a corresponding amount.
(7) In the laser processing device 100 according to a seventh aspect, the jet nozzle 3 is configured to jet, on the front side in the scanning direction Ds, the jet flow Fj toward the front as the jet flow Fj flows downward, and to jet, on the rear side in the scanning direction Ds, the jet flow Fj toward the rear as the jet flow Fj flows downward.
   According to the configuration described above, on the front side in the scanning direction Ds, the jet flow Fj is formed so as to flow toward the front as the jet flow Fj flows downward. On the rear side in the scanning direction Ds, the jet flow Fj is formed so as to flow toward the rear as the jet flow Fj flows downward. As a result, the possibility of the jet flow Fj being drawn inward is reduced, and the negative pressure state of the region surrounded, on the front and rear sides, by the jet flows Fj can be maintained in a stable manner.
(8) In the laser processing device 100 according to an eighth aspect, the jet nozzles 3 and the intake part 5 move integrally with the laser irradiation unit 1 following the laser irradiation unit 1 in the scanning direction Ds.

According to the configuration described above, as a result of the jet nozzles 3 and the intake part 5 following the laser irradiation unit 1, it is possible to remove the plumes and fumes in a constant and stable manner in accordance with the position of the processing point P.

### Reference Signs List

100 Laser processing device
1 Laser irradiation unit
2, 2b, 2c, 2d Nozzle assembly
3 Jet nozzle
4 Side jet nozzle
5, 5c Intake part
6 Skirt portion
21 Cover
22 Window portion
23 Communication portion
31 Injection port
41 Side injection port
71 Air injection part
72 Air intake part
As Suction port
B Blower
Bc Bottom surface
C Kerf
Ds Scanning direction
Fa Air flow
Fj Jet flow
Fs Side jet flow
L Laser
P Processing point
Sw Workpiece surface
W Workpiece
Vn Negative pressure space
Vs Suction space

## Claims

1. A laser processing device comprising:
a laser irradiation unit configured to perform processing on a workpiece by using a laser, while scanning a workpiece surface, to form a kerf;
jet nozzles respectively provided on front and rear sides in a scanning direction of the laser and configured to form jet flows flowing toward a bottom surface of the kerf; and
an intake part configured to suck, above injection ports of the jet nozzles, a gas in a region surrounded by the jet flows from the front and rear sides.

2. The laser processing device according to claim 1, wherein
an opening area of the intake part is larger than an opening area of the injection ports.

3. The laser processing device according to claim 1 or 2, further comprising:
a cover covering the workpiece from above; and
a window portion provided in the cover and configured to transmit the laser.

4. The laser processing device according to claim 1 or 2, wherein
the intake part includes an air injection part provided between the jet nozzles and configured to jet air from one side in a direction including a plane intersecting an irradiation direction of the laser; and
an air intake part configured to suck the air jetted from the air injection part.

5. The laser processing device according to any one of claims 1 to 4, further comprising:
side jet nozzles provided on both sides of the jet nozzle in a width direction orthogonal to the scanning direction, extending in the scanning direction, and configured to form side jet flows flowing toward both sides in a width direction of the kerf in the workpiece surface.

6. The laser processing device according to any one of claims 1 to 5, further comprising:
skirt portions provided on both sides of the jet nozzle in a width direction orthogonal to the scanning direction, and extending in the scanning direction, a lower end of each of the skirt portions being in contact with the workpiece surface.

7. The laser processing device according to any one of claims 1 to 6, wherein
the jet nozzle is configured to jet, on the front side in the scanning direction, the jet flow toward the front as the jet flow flows downward, and to jet, on the rear side in the scanning direction, the jet flow toward the rear as the jet flow flows downward.

8. The laser processing device according to any one of claims 1 to 7, wherein
the jet nozzles and the intake part move integrally with the laser irradiation unit following the laser irradiation unit in the scanning direction.
